# EUROPÄISCHE PATENTSCHRIFT

(11) **EP 1 695 852 B1**
(45) Veröffentlichungstag und Bekanntmachung des Hinweises auf die Patenterteilung: **12.03.2008**
(21) Anmeldenummer: 06001395.0
(22) Anmeldetag: 24.01.2006
(51) Int. Cl.: B60J 5/06, B61D 19/02

(54) **Innenschwenktür eines Fahrzeugs**
Swing door moving inside for a vehicle
Porte pivotante à l'interieur pour un véhicule

(30) Priorität: 25.02.2005 DE 202005003055 U
(43) Veröffentlichungstag der Anmeldung: 30.08.2006
(73) Patentinhaber: Hübner GmbH, 34123 Kassel (DE)
(72) Erfinder:
(74) Vertreter: WALTHER, WALTHER & HINZ Patentanwälte - European Patent Attorneys

(56) Entgegenhaltungen:
- WO-A-01/56823
- LU-A1- 73 736
- US-A- 3 462 881

## Beschreibung

Die vorliegende Erfindung betrifft eine Innenschwenktür eines Fahrzeugs, insbesondere eines Busses, umfassend mindestens einen Türflügel, der durch eine Drehsäule schwenkbar antreibbar ist, wobei zur Führung des Türflügels der Türflügel einen Führungsnocken aufweist, wobei der Führungsnocken in der Nut einer Führungsschiene geführt ist, wobei die Nut der Führungsschiene einen abgewinkelten Endabschnitt aufweist, an den sich ein Führungsabschnitt längs des Fahrzeugs anschließt.

Innenschwenktüren der eingangs genannten Art sind aus dem Stand der Technik hinreichend bekannt. Hierbei sind im Deckenbereich des Türportals sogenannte Führungsschienen vorgesehen, die dafür sorgen, dass der Türflügel bei Antrieb durch die Drehsäule von der Geschlossenstellung in die Offenstellung überführt wird, und wobei eine solche Führungsschiene darüber hinaus dafür sorgt, dass der Türflügel insbesondere in Geschlossenstellung durch die Führungsschiene gehalten ist. Das heißt, die Führungsschiene bietet eine Art einer Verriegelung, die schlussendlich dafür sorgt, dass der Türflügel weder bei Krafteinwirkung von innen noch von außen einer solchen Kraft nachgibt und gegebenenfalls die Türöffnung freigibt.

In diesem Zusammenhang ist aus der LU 73736 eine Innenschwenktür der eingangs genannten Art bekannt, wobei allerdings der Türflügel zur Offenstellung nicht derart fixiert ist, dass sich zusteigende Personen an einem Griff an dem Türflügel festhalten können, ohne dass sich der Türflügel aus der Offenstellung verschiebt.

Aus dem Stand der Technik ist weiterhin eine Innenschwenktür bekannt, die eine Führungsschiene mit einer Nut zur Aufnahme des Führungsnockens aufweist, wobei die Nut nach dem Stand der Technik im Wesentlichen zwei Abschnitte aufweist, nämlich einen Führungsabschnitt und einen dazu abgewinkelten Endabschnitt, wobei sich der Führungsabschnitt im Wesentlichen längs der Fahrzeuglängsachse erstreckt. Befindet sich der Nocken des Türflügels in dem abgewinkelten Endabschnitt, dann befindet sich der Türflügel in Offenstellung, das heißt, der Türflügel steht quer zur Fahrzeuglängsachse. Wird nunmehr die Drehsäule angetrieben, so muss zunächst der Nocken aus dem abgewinkelten Endabschnitt in den Längsführungsabschnitt überführt werden. Hierbei muss der Nocken in der Nut einen 90-Grad-Bogen durchlaufen. Es hat sich herausgestellt, dass in dem Moment, wo sich dieser Nocken genau in diesem 90-Grad-Bogen befindet, die Drehsäule eine erhebliche Kraft zum Verschieben des Türflügels aufbringen muss, da in diesem Moment quasi die Totpunktlage überwunden werden muss. Das heißt, dass der Nocken in Richtung des abgewinkelten Endstückes verfahren wird und dort schlussendlich eine extreme Kraft auf diese 90-Grad-Kurve ausübt, bevor er dann in den Längsführungsabschnitt übergeht.

Leichte Verschmutzungen in der Nut zur Führung des Nockens reichen aus, damit der Nocken nicht die Totpunktlage überwinden kann.

Der Erfindung liegt daher die Aufgabe zu Grunde eine Innenschwenktür der eingangs genannten Art derart weiterzubilden, dass auch bei beispielsweise verschmutzter Nut oder verschlissenem Nocken ein im Wesentlichen ruckfreier Betrieb der Schwenktür beim Öffnen und Schließen gewährleistet ist.

Die Aufgabe wird erfindungsgemäß dadurch gelöst, dass im Bereich des Übergangs vom Endabschnitt zum Führungsabschnitt die Nut in diesem Übergangsbereich einen in Richtung der Außenseite des Fahrzeugs ausgebauchten Abschnitt aufweist, so dass sich ein wellenförmiger Verlauf der Nut in der Schiene ergibt. Das heißt, dass die Breite der Nut als solche über ihre gesamte Länge immer gleich bleibt. Es ist lediglich so, dass im Übergangsbereich vom abgewinkelten Endabschnitt zum Längsführungsabschnitt dieser Übergangsbereich weicher gestaltet ist, also einen wesentlich größeren Radius aufweist, als die bekannte 90-Grad-Führung, wobei insbesondere vorgesehen ist, dass die Nut in diesem Übergangsbereich oder Übergangsabschnitt nach außen, das heißt auf die Fahrzeugaußenseite zu, eine Ausbauchung bei gleichbleibender Nutbreite aufweist. Hiermit konnte erreicht werden, dass die Verschwenkung der Tür in diesem Übergangsbereich einen wesentlich geringeren Kraftaufwand erfordert als beim Stand der Technik.

Weitere vorteilhafte Merkmale sind den Unteransprüchen zu entnehmen.

So ist insbesondere vorgesehen, dass der Endabschnitt eine Abwinklung von wesentlich weniger als 90 Grad, insbesondere etwa 45 Grad zur Längsachse des Fahrzeugs aufweist, wobei sich herausgestellt hat, dass bei einem solchen Winkel von etwa 45 Grad der Türflügel in Offenstellung nach wie vor sicher gehalten ist, auch wenn der am Türflügel angeordnete Haltegriff durch zusteigender Passagiere beansprucht wird. Gleichfalls fördert ein derart geringer Winkel von etwa 45 Grad den sanften und damit im Wesentlichen ruckfreien Übergang des Türflügels von der Offenstellung in die Geschlossenstellung, da die auf den Nocken wirkende Antriebskraft immer auch eine Komponente in Richtung längs zur Nut oder Schiene enthält.

Der Nocken selbst ist durch einen Nockenarm mit dem Türflügel verbunden, wobei der Türflügel darüber hinaus mit der Drehsäule durch einen Gelenkarm in Verbindung steht.

Anhand der perspektivischen Darstellung wird die Erfindung nachstehend beispielhaft näher erläutert. Die Darstellung zeigt eine Ansicht von innen auf den Deckenbereich des Türportals.

Das insgesamt mit 1 bezeichnete Türportal umfasst die beiden Türflügel 2 und 3 einer Innenschwenktür, wobei ein jeder Türflügel durch eine Drehsäule 4 angetrieben wird, wobei die Drehsäule mit dem Türflügel über den Gelenkarm 5 in Verbindung steht. Im oberen Bereich des Türportals befindet sich ein sogenannter Antriebsträger 6, an der die insgesamt mit 10 bezeichnete Führungsschiene angeordnet ist. Diese Führungsschiene 10 besitzt eine Nut 11, in der der Nocken 13a des Nockenarmes 13 des Türflügels 2 bei Bewegung des Türflügels entlang gleitet.

Gegenstand der Erfindung ist nunmehr die Ausbildung der Nut 11 in der Führungsschiene 10. Erkennbar besitzt diese Führungsschiene im Wesentlichen drei Abschnitte, nämlich einen ersten im Wesentlichen im 45 Grad zur Längsachse des Fahrzeugs abgewinkelten Endabschnitt 14, einen sich daran anschließenden Übergangsabschnitt 14a und einen sich daran anschließenden dritten Abschnitt 14b, wobei die beiden Abschnitte 14a und 14b den sogenannten Längsführungsabschnitt bilden. Erkennbar ist der Verlauf des Endabschnittes 14 zum Längsführungsabschnitt 14a, 14b derart, dass die Nut 11 in diesem Bereich zunächst nach außen, also in Richtung der Außenseite des Fahrzeugs ausgebaucht verläuft, um dann im Bereich des letzten Abschnittes 14b wieder nach innen geführt zu werden, so dass sich ein im Wesentlichen wellenförmiger Verlauf ergibt, der einen sanften Übergang des Türflügels, und hier insbesondere des in der Nut 11 geführten Nockens 13a von der Offenstellung in die Geschlossenstellung des Türflügels ermöglicht.

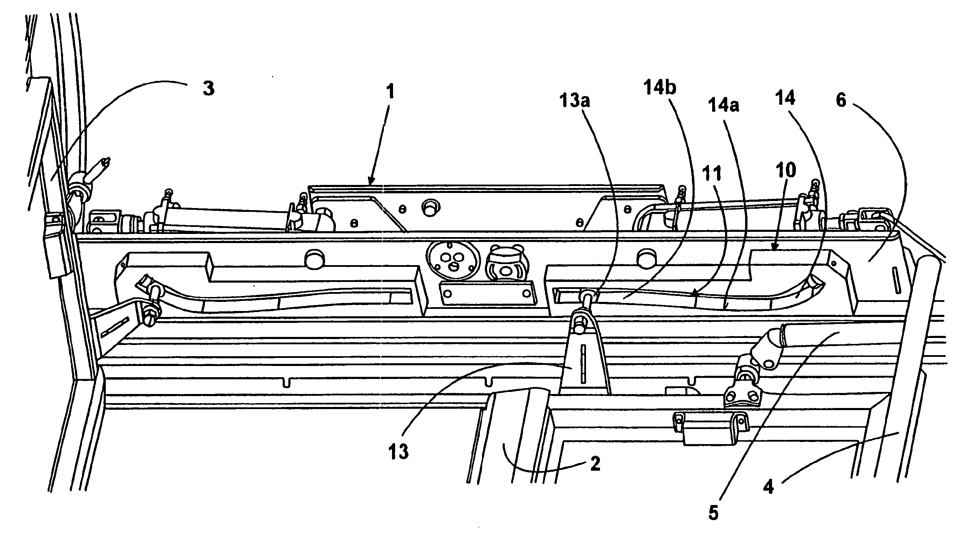

## Patentansprüche

1. Schwenktür (1), insbesondere Innenschwenktür eines Fahrzeugs, insbesondere eines Busses, umfassend mindestens einen Türflügel (2, 3), der durch eine Drehsäule (4) schwenkbar antreibbar ist, wobei zur Führung des Türflügels der Türflügel einen Führungsnocken (13a) aufweist, wobei der Führungsnocken (13a) in der Nut (11) einer Führungsschiene (10) geführt ist, wobei die Nut (11) der Führungsschiene (10) einen abgewinkelten Endabschnitt (14) aufweist, an den sich ein Führungsabschnitt (14a, 14b) längs des Fahrzeugs anschließt
**dadurch gekennzeichnet,**
**dass** der Endabschnitt in einem Winkel von größer 45° aber weniger als 90°zur Längsachse des Fahrzeugs abgewinkelt ist, wobei
im Bereich des Übergangs vom Endabschnitt (14) zum Führungsabschnitt (14a, 14b) die Nut (11) in diesem Übergangsbereich einen in Richtung der Außenseite des Fahrzeugs ausgebauchten Abschnitt (14a) aufweist, so dass sich ein wellenförmiger Verlauf der Nut (11) in der Schiene (10) ergibt.

2. Schwenktür nach Anspruch 1,
**dadurch gekennzeichnet,**
**dass** der Führungsnocken (13a) durch einen Nockenarm (13) mit dem Türflügel (2, 3) in Verbindung steht.

3. Schwenktür nach Anspruch 1,
**dadurch gekennzeichnet,**
**dass** der Türflügel (2, 3) mit der Drehsäule (4) durch einen Gelenkarm (5) in Verbindung steht.

## Claims

1. A swing door (1), more specifically an inward swing door of a vehicle, of a bus in particular, comprising at least one door leaf (2, 3) that is adapted to be pivotally driven by a rotary column (4), said door leaf having a guide cam (13a) for guiding said door leaf, said guide cam (13a) being guided in the groove (11) of a guide rail (10), said groove (11) of said guide rail (10) having an angled end portion (14) that is adjoined with a guide portion (14a, 14b) extending alongside the vehicle,
**characterized in**
**that** said end portion is inclined at an angle of more than 45° but of less than 90° to the longitudinal axis of the vehicle, said groove (11) having, in the region of transition between the end portion (14) and the guide portion (14a, 14b), a portion (14a) bulging outward toward the vehicle's outer side in this transition region so that the groove (11) has an undulated shape in said rail (10).

2. The swing door as set forth in claim 1,
**characterized in**
**that** the guide cam (13a) is connected to the door leaf (2, 3) via a cam arm (13).

3. The swing door as set forth in claim 1,
**characterized in**
**that** the door wing (2, 3) is connected to the rotary column (4) via an articulated arm (5).

## Revendications

1. Porte battante (1), notamment porte battante s'ouvrant vers l'intérieur d'un véhicule, notamment d'un bus, comprenant au moins un vantail (2, 3) de porte apte à être entraîné en pivotement par une colonne tournante (4), le vantail de porte comportant une came de guidage (13a) du battant, la came de guidage (13a) étant guidée dans la gorge (11) d'un rail de guidage (10), la gorge (11) du rail de guidage (10) comportant une portion d'extrémité (14) coudée prolongée par une portion de guidage (14a, 14b) s'étendant le long du véhicule,
**caractérisée en ce**
**que** la portion d'extrémité est coudée selon un angle supérieur à 45° mais inférieur à 90° par rapport à l'axe longitudinal du véhicule, la gorge (11) comportant, dans la zone de transition entre la portion d'extrémité (14) et la portion de guidage (14a, 14b), une portion (14a) renflée vers la face extérieure du véhicule de sorte que l'on obtient une gorge (11) de forme ondulée dans le rail (10).

2. Porte battante selon la revendication 1,
**caractérisée en ce**
**que** la came de guidage (13a) est reliée au vantail (2, 3) de la porte par un bras de came (13).

3. Porte battante selon la revendication 1,
**caractérisée en ce**
**que** le vantail (2, 3) de la porte est relié à la colonne tournante (4) par un bras articulé (5).
